# FASCICULE DE BREVET EUROPEEN

(11) **EP 2 726 761 B1**
(45) Date de publication et mention de la délivrance du brevet: **07.03.2018**
(21) Numéro de dépôt: 12734979.3
(22) Date de dépôt: 20.06.2012
(51) Int. Cl.: F16H 57/08, F16H 57/04

(54) **SYSTEME PORTE SATELLITES POUR TRAIN EPICYCLOÏDAL**
PLANETENTRÄGERSYSTEM FÜR UMLAUFGETRIEBE
PLANET CARRIER SYSTEM FOR EPICYCLIC GEAR TRAIN

(30) Priorité: 29.06.2011 FR 1155804
(43) Date de publication de la demande: 07.05.2014
(73) Titulaire: Technoboost, 75116 Paris (FR)
(72) Inventeur: GIANNONI, Marc, F-75009 Paris (FR); RENAULT, Aurelien, F-78990 Elancourt (FR)
(74) Mandataire: Ménès, Catherine
(86) Numéro de dépôt international: PCT/FR2012/051396
(87) Numéro de publication internationale: WO 2013/001209

(56) Documents cités:
- EP-A1- 0 454 198
- FR-A1- 2 888 301

## Description

La présente invention est relative à un système porte satellites pour train épicycloïdal.

Plus particulièrement, l'invention concerne un système porte satellites pour train épicycloïdal de transmission de véhicule, notamment automobile, comprenant un corps porte satellites et des axes porte satellites, montés sur le corps.

Un système porte satellites de ce type est connu du document FR2888301. Dans ce système, les axes sont maintenus dans leur direction axiale par une multitude de pièces dont l'assemblage prend du temps. Une canalisation d'amenée d'huile est accrochée au corps porte satellite.

Il peut y avoir un problème relativement à la difficulté de montage et de positionnement spécifique des pièces les unes par rapport aux autres lors du montage, par exemple pour orienter des canaux de passage d'huile pour la lubrification des satellites.

En outre, les petits crochets assurant l'accrochage de la canalisation peuvent être fragiles, d'autant que l'environnement est hostile quand à la température par exemple. Si les crochets sont durs et très solides, ils sont difficiles à monter sans outil adapté.

Dans l'hypothèse d'un remplacement des crochets par un sertissage, le démontage nécessiterait de casser les pièces, ce qui est désavantageux. EP0454198A1 divulgue un système porte satellite selon le préambule de la revendication 1.

La présente invention a notamment pour but de remédier aux inconvénients de l'art antérieur.

A cet effet, l'invention a pour objet un système porte satellites selon la revendication 1. Dans divers modes de réalisation du système selon l'invention, on peut éventuellement avoir recours en outre à l'une et/ou à l'autre des dispositions suivante :
- l'excroissance est concave en prolongement d'une partie de la circonférence du passage de lubrifiant de la portion tubulaire d'arbre et s'étend en saillie radialement à l'extérieur de cette portion tubulaire, en étant en appui sur le corps ;
- la concavité est en saillie en ayant un dos à convexité vers l'extérieur de la portion tubulaire d'arbre ;
- le dispositif de fixation de chaque axe porte satellite peut canaliser du lubrifiant en communiquant avec le passage de lubrifiant de la portion tubulaire via la concavité de l'excroissance ;
- le corps porte satellites comporte des organes de serrage de la plaque de blocage au second côté dudit corps ;
- la plaque de blocage et les organes de serrage comportent des rainures et nervures à emboîtement par coulissement, un moyen de fixation assurant en outre l'immobilisation de ladite plaque au second côté du corps porte satellites.

Par ailleurs, l'invention a également pour objet un train épicycloïdal de transmission de véhicule, notamment automobile, à satellites et planétaires, caractérisé en ce qu'il comporte un système conforme à l'une quelconque des revendications précédentes assurant la fixation des satellites au corps porte satellites.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en plan d'un système porte satellites selon l'invention ;
- la figure 2 est une vue en perspective d'un système porte satellites selon l'invention ;
- la figure 3 est une vue en section suivant la ligne III-III de la figure 1, montrant le montage d'un axe porte satellite ;
- la figure 4 est une vue partielle en perspective d'un corps porte satellites et d'un axe porte satellite du système selon l'invention ;
- la figure 5 est une vue partielle en perspective correspondant à la figure 4, montrant un dispositif de fixation de l'axe en cours de montage ;
- la figure 6 est une vue partielle en perspective correspondant à la figure 4, montrant le dispositif de fixation de l'axe monté sur le corps porte satellites.

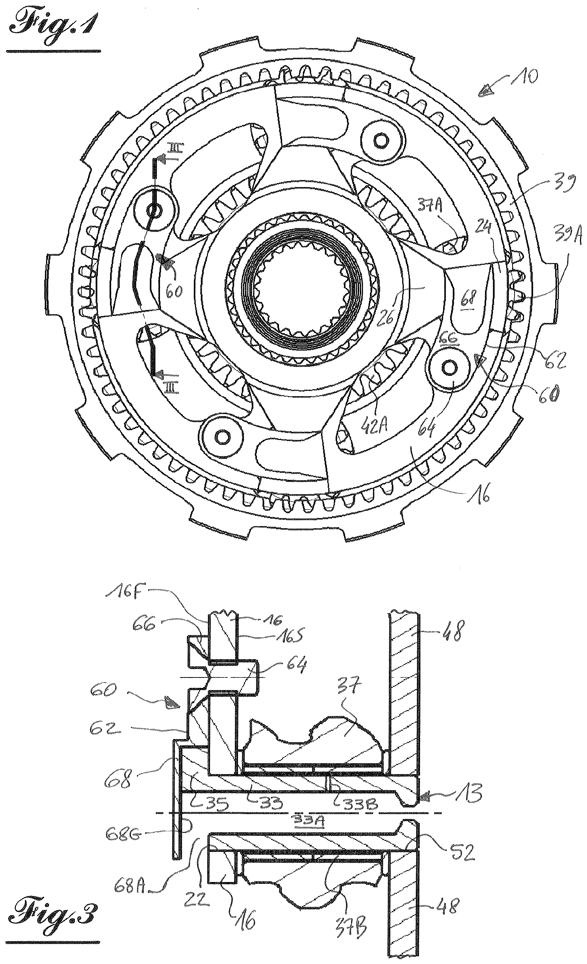

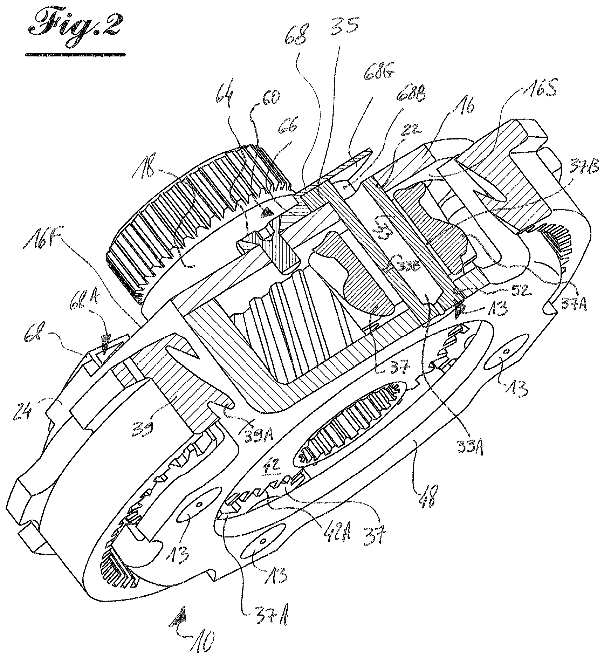

En se reportant à la figure 1 et à la figure 2, la référence 10 désigne un système porte satellites faisant partie d'un train épicycloïdal de transmission, notamment pour boîte de vitesses de véhicule automobile.

Sur les différentes figures, les mêmes références désignent des éléments identiques ou similaires. Dans la description qui va suivre, la direction désignée comme longitudinale correspond à la direction des divers axes des pignons d'un train épicycloïdal comportant un système porte satellites selon l'invention.

Le système porte satellites 10 comporte un corps porte satellites 12 qui supporte des axes porte satellites 13, par exemple au nombre de quatre (figure 1).

Le corps porte satellites 12 est constitué par un disque 16 et un manchon de guidage à rotation 18 dudit corps sur un arbre non représenté de la boîte de vitesses.

Le disque 16 délimite un orifice 22 dédié au passage de chacun des quatre axes porte satellites 13 (figure 2). Le disque 16 comporte, à proximité de chacun de ces orifices 22, un trou taraudé 23. En outre, le disque 16 comporte quatre groupes de blocs de fixation d'axe porte satellite, chacun de ces groupes étant centré sur un rayon du disque passant par l'orifice 22 correspondant de passage d'axe porte satellite 13.

Les blocs de fixation d'axe porte satellite sont saillants par rapport à une face de fixation 16F du disque 16. Chaque groupe de blocs comporte un bloc extérieur de fixation 24 et un bloc intérieur de fixation 26 qui sont disposés diamétralement opposés par rapport à leur orifice 22 et qui comportent un rebord de retenue axiale 28 déterminant, par rapport à la face de fixation 16F, une rainure de retenue 32 débouchant en direction dudit orifice 22.

Chaque axe porte satellite 13 comporte d'une part une portion 33 d'arbre de support de satellite sous forme tubulaire 33 et d'autre part une excroissance radiale 35 de blocage de l'axe.

La portion tubulaire 33 détermine un arbre creux à fût cylindrique central 33A de passage d'huile de lubrification du pignon satellite. Ce fût 33A est raccordé à au moins un canal radial d'amenée d'huile 33B vers l'extérieur de l'axe porte satellite 13. La portion tubulaire 33 de chaque axe porte satellite 13 traverse l'orifice 22 qui lui est dédié dans le disque 16 et s'étend d'un premier côté du corps.

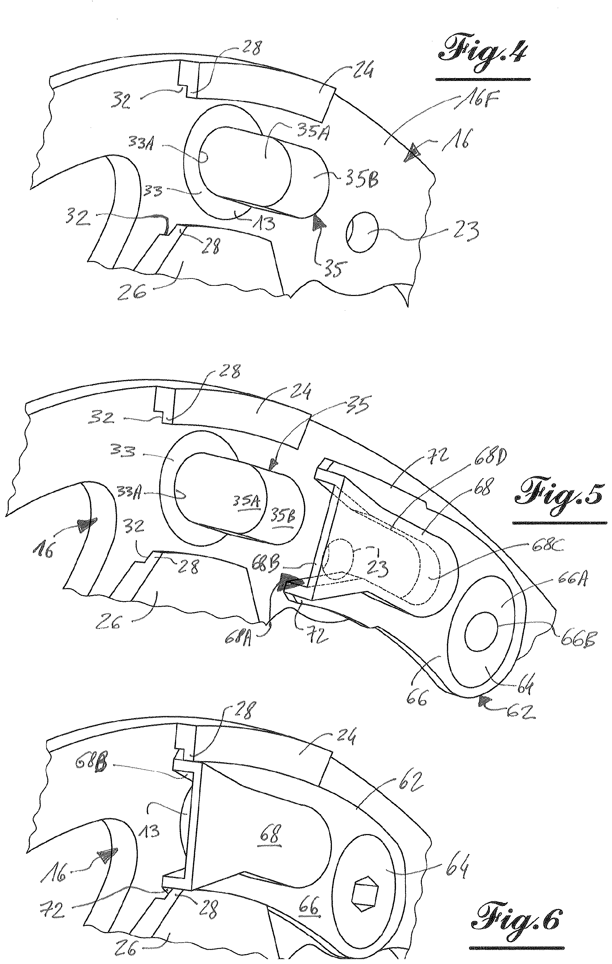

L'excroissance 35 est sensiblement en forme de came (figure 4) et est creuse en regard du fût cylindrique central 33A de passage d'huile, de manière à permettre l'alimentation en huile de lubrification de ce fût.

L'excroissance 35 recouvre une moitié de la circonférence de la portion tubulaire 33 et s'étend de manière déportée en saillie radialement à l'extérieur de cette portion tubulaire 33. L'excroissance 35 présente une paroi à concavité 35A en prolongement d'une partie de la circonférence du passage de lubrifiant 33A de la portion tubulaire d'arbre 33. Le dos de l'excroissance 35 est convexe en saillie radialement à l'extérieur de cette portion tubulaire. L'une des extrémités libres de l'excroissance radiale 35 comporte un toit plan 35B. L'excroissance radiale 35 s'étend d'un second côté du corps en ayant l'autre des extrémités libres de son déport radial contre la face de fixation 16F du disque 16.

La portion tubulaire 33 de chaque axe porte satellite 13 supporte à rotation un pignon satellite 37 à dents externes 37A. Les pignons satellites 37 sont adjacents à une face de support 16S du disque 16, à l'opposé de la face de fixation 16F. Un palier 37B est interposé entre chaque axe porte satellite 13 et son pignon satellite 37. Ce palier 37B peut recevoir de l'huile venant du fût cylindrique central 33A, via le canal d'amenée d'huile 33B (figure 2 et figure 3).

Les quatre pignons satellites 37 engrènent d'une part avec une couronne planétaire 39 à dents internes 39A (figure 1 et figure 2) et d'autre part avec les dents externes 42A d'une roue centrale planétaire 42 qui est solidaire du manchon de guidage à rotation 18 (figure 2).

En outre, les axes porte satellites 13 sont supportés par une cloche de support 48 ajourée d'une part à sa partie centrale pour laisser passer la roue planétaire 42 et d'autre part à quatre portions de sa périphérie pour laisser passer les pignons satellites 37.

Les axes porte satellites 13 sont solidaires de la cloche de support 48 en ayant leur extrémité libre de portion tubulaire 33 qui passe à travers des orifices 52 aménagés dans la cloche 48. Cette extrémité libre de portion tubulaire 33 est située à l'opposée à celle raccordée à l'excroissance radiale 35 et engagée dans son orifice 22 aménagé dans le disque 16.

Un dispositif de fixation 60 de chaque axe porte satellite maintien fixement l'excroissance radiale en appui sur le disque 16 du corps 12. Ce maintien a lieu à la périphérie de l'orifice 22 correspondant aménagé dans le disque 16.

Chaque dispositif de fixation 60 comprend une plaque de blocage 62 (figure 5) et une vis de fixation 64 de cette plaque contre la face de fixation 16F du disque 16 (figure 2 et figure 6), par vissage dans le trou taraudé 23.

La plaque de blocage 62 comporte une embase de fixation 66 présentant un lamage 66A et un perçage 66B pour recevoir la vis de fixation 64. Elle comporte en outre une portion en boîtier de verrouillage 68 qui détermine une encoche de logement 68A à embouchure évasée 68B et fond de verrouillage 68C présentant une forme complémentaire de la forme de l'excroissance radiale 35. A la base du boîtier de verrouillage 68, la plaque de blocage 62 comporte des nervures latérales 72 de maintien par engagement type queue d'aronde dans les rainures 34 des blocs de fixation qui correspondent.

Le fonctionnement du système porte satellites 10 ressort déjà en partie de la description qui précède et va maintenant être détaillé.

Les pignons satellites 37 montés entre le disque 16 et la cloche de support 48 et leurs axes porte satellites 13 supportent ces pignons satellites 37 engrenés avec la couronne planétaire 39 et la roue planétaire 42. La cloche 78 et le disque 16 sont solidarisés.

Les axes porte satellites 13 sont assemblés pendant ces opérations de montage de manière à avoir leur portion tubulaire 33 traversant les orifices 22 du disque 16 et les orifices 52 de la cloche 48, tout en ayant leur excroissance 35 en appui sur la face de fixation 16F du disque 16, pour un bon positionnement axial par rapport au disque. Le dos saillant de l'excroissance radiale 35 est orienté approximativement en direction du trou taraudé 23 du disque 16 (figure 4).

Avantageusement, le verrouillage des axes porte satellites 13 sur le disque 16 est effectué de manière simple, tout comme leur positionnement angulaire.

Chaque plaque de blocage 62 est approchée de l'excroissance 35 de l'axe porte satellite 13 qui lui correspond, comme représenté à la figure 5. La plaque de blocage 62 est positionnée de manière que l'embouchure 68B de sa portion en boîtier de verrouillage 68 soit en regard du dos saillant de l'excroissance radiale 35. Le fond de verrouillage 68C de la plaque de blocage 62 est en regard dudit trou taraudé 23. Les nervures latérales 72 ont leurs extrémités libres proches de l'embouchure 68B qui sont disposées à proximité des rainures 32 du bloc extérieur de fixation 24 et du bloc intérieur de fixation 26.

Ensuite, chaque plaque de blocage 62 est glissée sur la face de fixation 16F pour l'engagement d'une part de l'excroissance 35 avec l'encoche de logement 68A et d'autre part des nervures latérales 72 dans les rainures 32. L'arrondi convexe du dos de l'excroissance 35 aide au glissement de l'excroissance dans l'embouchure pour orienter correctement l'axe porte satellite 13 si besoin. Durant cet engagement, l'excroissance 35 traverse l'embouchure 68B et vient en butée dans le fond de verrouillage 68C en pivotant le cas échéant pour être automatiquement positionnée angulairement. En effet, l'axe porte satellite 13 peut tourner quand son dos glisse contre les faces latérales internes 68D de la portion en boîtier de verrouillage 68 de la plaque de blocage 62. Le toit plan 35B est axialement bloqué contre la face de plafond 68G (figure 2 et figure 3) de ladite portion en boîtier de verrouillage 68. Le perçage 66B est mis en correspondance du trou taraudé 23.

Ensuite, la vis de fixation 64 est serrée en passant dans le perçage 66B et le trou taraudé 23 pour immobiliser la plaque de blocage 62 par rapport au disque 16 du corps porte satellites (figure 5). En variante, tout moyen de fixation démontable est envisageable à titre d'équivalent à la fixation par vis.

Avantageusement, le système porte satellites 10 permet de réaliser à la fois l'arrêt, la mise en position et la lubrification des axes de satellites 13 dans le train épicycloïdal comportant les pignons satellites 37, la couronne planétaire 39 est le pignon planétaire 42.

Avantageusement, les axes porte satellites 13 sont démontables de leur support constitué par le corps porte satellites 12 et la cloche 48, sans destruction de pièce.

Avantageusement, l'indexation angulaire des axes porte satellites 13 est automatique lors de leur serrage en utilisant la plaque de blocage 62, ce qui permet une bonne orientation des trous de lubrification constitués par les canaux d'amenée d'huile 33B, sans nécessité d'un outil spécifique complexe pour le positionnement.

La fonction lubrification est avantageusement facilitée par le dispositif de fixation 60 dont l'encoche de logement 68A canalise le lubrifiant, d'autant que son embouchure évasée 68B constitue une écope pour favoriser l'entrée d'huile de lubrification.

Avantageusement, les blocs de fixation d'axe porte satellite sont conformés pour être des organes de serrage de la plaque de blocage 62 contre le disque 16. Ainsi, la reprise d'efforts entre la plaque de blocage 62 et le disque 16 de corps porte satellites 12 est réalisée par les nervures 72 de ladite plaque et les rainures 32 des blocs de fixation 24 et 26, ces rainures et nervure permettant en outre un assemblage rapide par emboîtement à coulissement. Avantageusement, la vis de fixation 64 sert alors à l'immobilisation de ladite plaque 62, sans reprise d'efforts.

## Revendications

1. Système porte satellites pour train épicycloïdal (37, 39, 42) de transmission de véhicule, comprenant un corps porte satellites (16) et des axes porte satellites (13) qui sont montés sur le corps, chacun des axes porte satellites (13) comprenant d'une part une portion d'arbre (33) de support de satellite, traversant un orifice (22) du corps et s'étendant d'un premier côté (16S) du corps, et d'autre part une excroissance (35) de blocage axial dudit axe porte satellite (13) relativement au corps (16), ledit système comprenant en outre un dispositif de fixation (60) de chaque axe porte satellite (13) maintenant fixement l'excroissance (35) en appui sur le corps (16) autour de l'orifice (22) sur le second côté (16F) du corps, **caractérisé en ce que** la portion d'arbre (33) de support de satellite est tubulaire et détermine un arbre creux à fût cylindrique central (33A) de passage d'huile de lubrification du pignon satellite, coopérant avec l'excroissance (35) qui est creuse, en regard du fût cylindrique central (33A) de passage d'huile, de manière à permettre l'alimentation en huile de lubrification de ce fût, **en ce que** le dispositif de fixation (60) de chaque axe porte satellite (13) et l'excroissance (35) ont des formes complémentaires en appui pour indexer angulairement l'excroissance (35) relativement au corps (16) auquel le dispositif de fixation (60) est positionné, **en ce que** le dispositif de fixation (60) de chaque axe porte satellite (13) comporte une plaque de blocage (62) qui chapeaute l'excroissance (35) par les formes complémentaires et qui est fixée au corps porte satellites (16) à son second côté (16F), **en ce que** la plaque de blocage (62) comporte une encoche de logement (68A) qui chapeaute l'excroissance (35) en présentant un fond de verrouillage (68C) dont la forme est complémentaire de la forme de l'excroissance et **en ce que** l'encoche de logement (68A) comporte une embouchure (68B) évasée et se resserrant vers le fond de verrouillage (68C) pour indexer angulairement l'excroissance (35) lors d'un déplacement de la plaque de blocage (62) guidée à montage relativement au corps porte satellites (16).

2. Système selon la revendication précédente, **caractérisé en ce que** l'excroissance (35) est concave en prolongement (35A) d'une partie de la circonférence du fût cylindrique central (33A) de la portion tubulaire d'arbre (33) et s'étend en saillie radialement à l'extérieur de cette portion tubulaire (33), en étant en appui sur le corps (16).

3. Système selon la revendication précédente, **caractérisé en ce que** la concavité (35) est en saillie en ayant un dos à convexité vers l'extérieur de la portion tubulaire d'arbre (33).

4. Système selon l'une quelconque des revendications précédentes, **caractérisé en ce que** le dispositif de fixation (60) de chaque axe porte satellite (13) peut canaliser du lubrifiant en communiquant avec le passage de lubrifiant (33A) de la portion tubulaire (33) via la concavité (35A) de l'excroissance (35).

5. Système selon l'une quelconque des revendications précédentes, **caractérisé en ce que** le corps porte satellites (16) comporte des organes de serrage (28) de la plaque de blocage (62) au second côté (16F) dudit corps.

6. Système selon la revendication précédente, **caractérisé en ce que** la plaque de blocage (62) et les organes de serrage (28) comportent des rainures (32) et nervures (72) à emboîtement par coulissement, un moyen de fixation (64) assurant en outre l'immobilisation de ladite plaque (62) au second côté (16F) du corps porte satellites (16).

7. Train épicycloïdal de transmission de véhicule, à satellites (37) et planétaires (39, 42), **caractérisé en ce qu'**il comporte un système (10) conforme à l'une quelconque des revendications précédentes assurant la fixation des satellites (37) au corps porte satellites (16).

## Patentansprüche

1. Planetenträgersystem für Umlaufgetriebe (37, 39, 42) eines Fahrzeuggetriebes, das einen Planetenträgerkörper (16) und Planetenträgerachsen (13), die auf den Körper montiert sind, umfasst, wobei jede der Planetenträgerachsen (13) einerseits einen Wellenabschnitt (33) zum Tragen des Trägers umfasst, der eine Öffnung (22) des Körpers durchquert und sich von einer Seite (16S) des Körpers erstreckt, und andererseits eine Ausstülpung (35) zum axialen Blockieren der Planetenträgerachsen (13) in Bezug auf den Körper (16), wobei das System außerdem eine Befestigungsvorrichtung (60) jeder Planetenträgerachse (13) umfasst, die die Ausstülpung (35) fest in Auflage auf dem Körper (16) um die Öffnung (22) auf der zweiten Seite (16F) des Körpers hält, **dadurch gekennzeichnet, dass** der Wellenabschnitt (33) zum Tragen des Planetenrads röhrenförmig ist und eine Hohlwelle mit zylindrischem zentralem Schaft (33A) zum Durchgehen von Schmieröl des Planetenkranzes festlegt, der mit der Ausstülpung (35), die hohl ist, gegenüber dem zylindrischen zentralen Schaft (33A) zum Durchgehen des Öls derart zusammenwirkt, dass das Zuführen von Schmieröl zu diesem Schaft erlaubt wird, und dass die Befestigungsvorrichtung (60) jeder Planetenträgerachse (13) und die Ausstülpung (35) komplementäre Formen in Auflage haben, um die Ausstülpung (35) in Bezug auf den Körper (16), an dem die Befestigungsvorrichtung (60) positioniert ist, winkelig zu positionieren, dass die Befestigungsvorrichtung (60) jeder Planetenträgerachse (13) eine Blockierungsplatte (62) umfasst, die auf der Ausstülpung (35) durch komplementäre Formen sitzt und die an dem Planetenträgerkörper (16) auf seiner zweiten Seite (16F) befestigt ist, dass die Blockierungsplatte (62) eine Aufnahmekerbe (68A), die auf der Ausstülpung (35) sitzt und einen Verriegelungsboden (68C) aufweist, dessen Form zu der Form der Ausstülpung komplementär ist, umfasst, und dass die Aufnahmekerbe (68A) eine Mündung (68B) umfasst, die aufgeweitet ist und sich zu dem Verriegelungsboden (68C) verengt, um die Ausstülpung (35) bei einer Verlagerung der Blockierungsplatte (62), die mit Montage in Bezug auf den Planetenträgerkörper (16) geführt ist, winkelig zu positionieren.

2. System nach dem vorhergehenden Anspruch, **dadurch gekennzeichnet, dass** die Ausstülpung (35) in Verlängerung (35A) eines Teils des Umfangs des zylindrischen zentralen Schafts (33A) des röhrenförmigen Wellenabschnitts (33) konkav ist und sich radial außerhalb von diesem röhrenförmigen Abschnitt (33) vorstehend erstreckt, während sie auf dem Körper (16) aufliegt.

3. System nach dem vorhergehenden Anspruch, **dadurch gekennzeichnet, dass** die Konkavität (35) vorsteht, indem sie einen Rücken mit Konvexheit von dem röhrenförmigen Wellenabschnitt (33) nach außen hat.

4. System nach einem der vorhergehenden Ansprüche, **dadurch gekennzeichnet, dass** die Befestigungsvorrichtung (60) jeder Planetenträgerachse (13) Schmiermittel kanalisieren kann, indem sie mit dem Schmiermitteldurchgang (33A) des röhrenförmigen Abschnitts (33) über die Konkavität (35A) der Ausstülpung (35) in Verbindung steht.

5. System nach einem der vorhergehenden Ansprüche, **dadurch gekennzeichnet, dass** der Planetenträgerkörper (16) Organe zum Spannen (28) der Blockierungsplatte (62) auf der zweiten Seite (16F) des Körpers umfasst.

6. System nach dem vorhergehenden Anspruch, **dadurch gekennzeichnet, dass** die Blockierungsplatte (62) und die Spannorgane (28) Rillen (32) und Rippen (72) mit Verschachteln durch Gleiten umfassen, wobei ein Befestigungsmittel (64) außerdem das Stillstellen der Platte (62) auf der zweiten Seite (16F) des Planetenträgerkörpers (16) sicherstellt.

7. Umlaufgetriebe eines Fahrzeuggetriebes mit Planetenrädern (37) und Umlaufrädern (39, 42), **dadurch gekennzeichnet, dass** es ein System (10) nach einem der vorhergehenden Ansprüche umfasst, das die Befestigung der Planetenräder (37) an dem Planetenträgerkörper (16) sicherstellt.

## Claims

1. A planet carrier system for epicyclic gear train (37, 39, 42) of a vehicle transmission, including a planet carrier body (16) and planet carrier axles (13) which are mounted on the body, each of the planet carrier axles (13) including on the one hand a planet support shaft portion (33), passing through an orifice (22) of the body and extending from a first side (16S) of the body, and on the other hand a protrusion (35) for axially blocking said planet carrier axle (13) relative to the body (16), said system including in addition a securing device (60) of each planet carrier axle (13), keeping the protrusion (35) securely resting on the body (16) around the orifice (22) on the second side (16F) of the body, **characterized in that** the planet support shaft portion (33) is tubular and establishes a hollow shaft with central cylindrical barrel (33A) for passage of lubricating oil for the planet wheel, cooperating with the protrusion (35) which is hollow, facing the central cylindrical barrel (33A) for the passage of oil, so as to permit the supplying of lubricating oil for this barrel, **in that** the securing device (60) of each planet carrier axle (13) and the protrusion (35) have complementary shapes in support to index angularly the protrusion (35) relative to the body (16) to which the securing device (60) is positioned, **in that** the securing device (60) of each planet carrier axle (13) comprises a blocking plate (62) which caps the protrusion (35) by complementary shapes and which is secured to the planet carrier body (16) at its second side (16F), **in that** the blocking plate (62) comprises a housing recess (68A) which caps the protrusion (35), presenting a locking bottom (68C), the shape of which is complementary to the shape of the protrusion and **in that** the housing recess (68A) comprises a flared opening (68B) and narrowing towards the locking bottom (68C) to index angularly the protrusion (35) during a displacement of the blocking plate (62) guided for mounting relative to the planet carrier body (16).

2. The system according to the preceding claim, **characterized in that** the protrusion (35) is concave in extension (35A) of a portion of the circumference of the central cylindrical drum (33A) of the shaft tubular portion (33) and extends projecting radially to the exterior of this tubular portion (33), resting on the body (16).

3. The system according to the preceding claim, **characterized in that** the concavity (35) projects, having a back with convexity towards the exterior of the shaft tubular portion (33).

4. The system according to any one of the preceding claims, **characterized in that** the securing device (60) of each planet carrier axle (13) can channel lubricant, communicating with the lubricant passage (33A) of the tubular portion (33) via the concavity (35A) of the protrusion (35).

5. The system according to any one of the preceding claims, **characterized in that** the planet carrier body (16) comprises clamping elements (28) of the blocking plate (62) to the second side (16F) of said body.

6. The system according to the preceding claim, **characterized in that** the blocking plate (62) and the clamping elements (28) comprise grooves (32) and ribs (72) for fitting by sliding, a securing means (64) ensuring in addition the immobilisation of said plate (62) to the second side (16F) of the planet carrier body (16).

7. An epicyclic gear train of a vehicle transmission, with satellites (37) and planets (39, 42), **characterized in that** it comprises a system (10) according to any one of the preceding claims, ensuring the securing of the satellites (37) to the planet carrier body (16).
